(19) Europäisches Patentamt / European Patent Office / Office européen des brevets

(11) **EP 4 571 509 A1**

(12) **EUROPEAN PATENT APPLICATION**

(43) Date of publication:
**18.06.2025 Bulletin 2025/25**

(21) Application number: **23383268.2**

(22) Date of filing: **11.12.2023**

(51) International Patent Classification (IPC):
**G06F 9/50** (2006.01)   **G06N 3/063** (2023.01)
**G06N 3/098** (2023.01)   **G06N 20/00** (2019.01)

(52) Cooperative Patent Classification (CPC):
**G06F 9/5027; G06F 9/5044; G06F 9/5094;
G06N 3/063; G06N 3/098; G06N 5/01; G06N 20/00;**
G06F 2209/502; G06F 2209/503

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Telefonica Innovacion Digital SL
28050 Madrid (ES)**

(72) Inventors:
• **Kourtellis, Nikolas
28050 Madrid (ES)**
• **Omaña Iglesias, Jesús Alberto
28050 Madrid (ES)**
• **Noguero, Solans
28050 Madrid (ES)**

(74) Representative: **Carlos Hernando, Borja
Garrigues IP, S.L.P.
Plaza de Colón, 2
28046 Madrid (ES)**

(54) **METHOD, SERVER AND COMPUTER PROGRAMS FOR COST-EFFECTIVE AND FAIR COMPUTING DEVICE SELECTION IN A DISTRIBUTED LEARNING ARCHITECTURE**

(57)    A method, a server and computer programs for cost-effective and fair computing device selection in a distributed learning architecture are proposed. The method comprises executing a learning procedure between a server and a subset of selected computing devices until a stop criteria is reached. The subset is selected by the server: sending a request to a plurality of computing devices to determine their availability for a learning training round; checking whether static attributes of the available devices are accessible, or otherwise, sending a request to the available devices for their static attributes; sending a request to the available devices for dynamic attributes thereof; calculating, for each device, an energy consumption operational cost that will be incurred if the device participates in the learning training round using computation and communication power costs of each device; and performing, for each device, a multi-objective optimization that minimizes an overall cumulative operational cost of the device and fairness assessment.

Fig. 1

## Description

## Technical Field

The present invention relates to a method, server and computer programs for cost-effective and fair computing device selection in a distributed learning architecture.

## Background of the Invention

Federated learning offers several key advantages, with one of its main attributes being the transfer of training responsibility to the client. This shift encompasses computation and communication costs, among other factors. To ensure diversity of models and minimize bias, the popular approach involves randomly selecting clients [1]. However, more advanced methods have emerged, falling into two broad categories: those focusing on cost-efficiency [2,3] and those addressing fairness in client selection [4].

In terms of cost-effective solutions, [2] proposed a design that optimizes the number of participating clients and local iterations, effectively minimizing the total cost while ensuring convergence. Conversely, [5] introduced solutions that enable all clients to participate while accounting for potential losses from unreliable network connections.

Addressing fairness in the client selection process, [6] presented a method for training on heterogeneous devices. They employed the Ordered Dropout technique to extract submodules with smaller footprints from a main model, ensuring flexibility across various environmental setups. These efforts aimed to introduce, at least some, fairness into the federated learning process.

The Federated Learning setting shifts a (big) portion of model training operational costs from the server side to client's side. State-of-the-art methods usually pursue server goals at the time of selecting clients to train their models, hence, overlooking the costs (e.g. in terms of energy consumption) those clients are paying.

Recent research has shown how the application of Federated Learning approaches can lead to higher energy consumption volumes than their centralized-learning counterparts [7].

In general, existing solutions do not consider either achieving a fair distribution of client participation costs and/or do not consider how the overall operational costs varies depending on the selected clients among clients. Failing to consider a combination of both ideas at the same time leads unequivocally to a cost-inequality scenario where few clients would pay most of the operational costs (short-head, long-tail distribution).

This occurs with approaches such as reputation-based techniques, often used in state-of-the-art, which simply maximize disparities in selection rates through a rich-gets-richer approach, causing highly reputed clients to pay higher accumulated costs.

References:

[1] Brendan McMahan, Eider Moore, Daniel Ramage, Seth Hampson, and Blaise Aguera y Areas. Communication-efficient learning of deep networks from decentralized data. In Artificial intelligence and statistics, pages 1273-1282. PMLR, 2017.

[2] Bing Luo and Xiang Li and Shiqiang Wang and Jianwei Huang and Leandros Tassiulas. "Cost-Effective Federated Learning Design" arXiv, 2020

[3] Y. Zhan, J. Zhang, Z. Hong, L. Wu, P. Li and S. Guo, "A Survey of Incentive Mechanism Design for Federated Learning," in IEEE Transactions on Emerging Topics in Computing, vol. 10, no. 2, pp. 1035-1044, 1 April-June 2022, doi: 10.1109/TETC.2021.3063517.

[4] Y. Shi, H. Yu and C. Leung, "Towards Fairness-Aware Federated Learning," in IEEE Transactions on Neural Networks and Learning Systems, doi: 10.1109/TNNLS.2023.3263594.

[5] P. Zhou, P. Fang, and P. Hui, "Loss tolerant federated learning," ArXiv, vol. abs/2105.03591, 2021.

[6] Horváth, Samuel, Stefanos Laskaridis, Mario Almeida, Ilias Leontiadis, Stylianos Venieris, and Nicholas Lane. "FjORD: Fair and Accurate Federated Learning under Heterogeneous Targets with Ordered Dropout." In Advances in Neural Information Processing Systems

[7] Wu, C.-J., Raghavendra, R., Gupta, U., Acun, B., Ardalani, N., Maeng, K., Chang, G., Behram, F. A., Huang, J., Bai, C., Gschwind, M., Gupta, A., Ott, M., Melnikov, A., Candido, S., Brooks, D., Chauhan, G., Lee, B., Lee, H.-H. S., ... Hazelwood, K. (2021). Sustainable AI: Environmental Implications, Challenges and Opportunities. 2, 1-16.

## Description of the Invention

An object of present invention is to provide a solution that seeks to minimize operational cost disparities across users while also minimizing the cumulative cost incurred by all the participants. This optimization solution is done while ensuring that privacy is maintained through the use of privacy-preserving methods.

Operational costs are approximated by leveraging dynamic electricity prices and end-device conditions (e.g., battery levels and health), among other variables that influence costs for the end user.

In a first aspect, present invention proposes a method for cost-effective and fair computing device selection in a distributed learning architecture, particularly, a Federated Learning architecture. The method comprises a) receiving, by a subset of selected computing devices, for a learning training round, a global machine learning (ML) model; b) training, by each computing device of the subset of selected computing devices, the received global ML model with local data available at the computing device, providing a trained local ML model as a result; c) sending, by each computing device, the trained local ML model to a server; d) aggregating, by the server, the received local ML models; and e) repeating steps a)-d) until a stop criteria is reached.

Different to the known proposals, in the proposed method, the subset of computing devices is selected by the server by: sending a request to a plurality of computing devices to determine their availability for a learning training round; checking whether static attributes of the available computing devices are accessible, or otherwise, sending a request to the available computing devices for their static attributes; sending a request to the available computing devices for dynamic attributes thereof; calculating, for each computing device, an energy consumption operational cost that will be incurred if the computing device participates in the learning training round using computation and communication power costs of each computing device; and performing, for each computing device, a multi-objective optimization that minimizes an overall cumulative operational cost of the computing device and fairness assessment.

In some embodiments, the multi-objective optimization is based on a bilevel optimization that comprises checking if an equation's optimization function is convex, and if it is, solving the function using the Karush-Kuhn-Tucker (KKT) approach or a Gradient-Descent technique.

In some embodiments, the static attributes comprises hardware specifications of the computing devices including year, brand, memory, CPU, GPU availability, and/or storage capacity.

In some embodiments, the dynamic attributes comprises a battery level, a battery health, a charging status, a connectivity status, a data transfer price, a resource consumption, a geolocation, a sample size, and/or a sample type of the computing devices.

In some embodiments, before the performance of the multi-objective optimization the method comprises defining threshold-based rules for some of the dynamic attributes, and discarding the computing devices not satisfying the defined threshold-based rules.

In some embodiments, previous to the calculation of the energy consumption operational cost, one or more heuristics are used to reduce the number of computing devices for which the calculation need to be performed.

Other embodiments of the invention that are disclosed herein also include a server and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Present invention enables the capacity of any Federated Learning setting to enforce equality in the operational cost distribution that Federated Learning computing devices (i.e. clients) are paying for participating on it while aiming to minimize the overall cumulative operational costs incurred by the computing devices participating in the process.

State of the art does not consider the disparities in terms of costs among computing devices, what most often would lead to few computing devices being selected more often and doing most of the training effort, what is translated to higher portions of work being incurred by those few computing devices.

## Brief Description of the Drawings

The previous and other advantages and features will be more fully understood from the following detailed description of embodiments, with reference to the attached figures, which must be considered in an illustrative and non-limiting manner, in which:

Fig. 1 schematically shows the steps when performing a round in the distributed learning procedure. Present invention focuses on the client selection box.
Fig. 2 illustrates the steps for selecting computing devices such that individual fairness related to operation cost can be achieved. Continues line indicate the next step to be performed unless a dotted line is also present. Dotted lines indicate that the condition is true and the step to be executed due to such condition.

## Detailed Description of the Invention and of Preferred Embodiments

Present invention proposes a solution for distributed learning architectures, particularly for Federated Learning, that considers client's operational costs while ensuring privacy. The main idea is to obtain computing device's data using privacy-preserving methods and then compute operational costs based on dynamic electricity prices, end-device conditions, and other variables that influence costs for the end user. This is followed by clustering the computing devices based on hardware specifications and operational costs to optimize client-level usage and ensure individual fairness.

Federated Learning is a Machine Learning (ML) technique used to train ML models in a privacy-preserving fashion. To achieve that, models are trained in a decentralized manner, with individual computing devices (e.g. mobile phones, IoT devices, computers, sensors, wearables, etc.) holding training data to train local models, which are then aggregated in a central node -servers or cloud facilities- . This methodology avoids the need of exchanging personal data to train the global model, as only local models are sent to the server.

The Federated Learning procedure, as other distributed learning procedures, is iterated multiple times: computing devices receive a global model and re-train it with their locally available data, after, local models are again sent to the server that aggregates them. The process continues until a learning convergence threshold or any other stop criteria, related to model performance, is reached. It should be noted that although the invention is particularly focused on the Federated Learning setting, it can be equally used in other distributed learning paradigms thar differ from Federated Learning on the fact of not restricting the communication of raw data between computing devices.

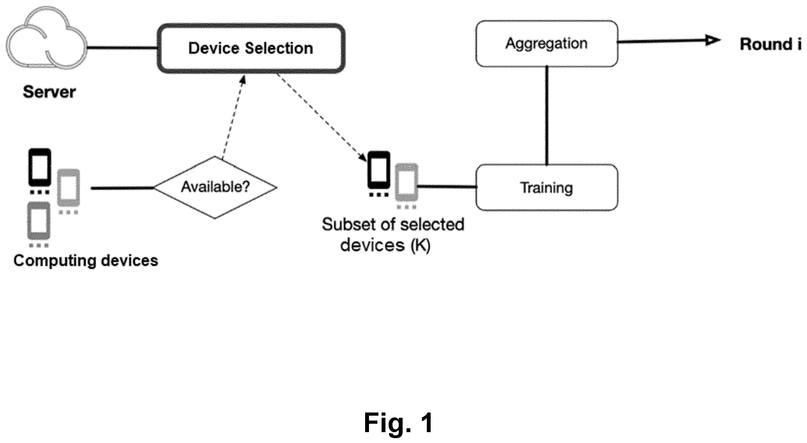

In Fig. 1, a schematic description of a given round of the distributed learning procedure is illustrated.

Present invention uses an individual-fairness approach based on the notion that similar-enough computing devices should be treated similarly. The invention's approaches this notion from the point of view of the operational cost, where computing devices with similar characteristics are expected to pay similar operational costs during the distributed learning procedure.

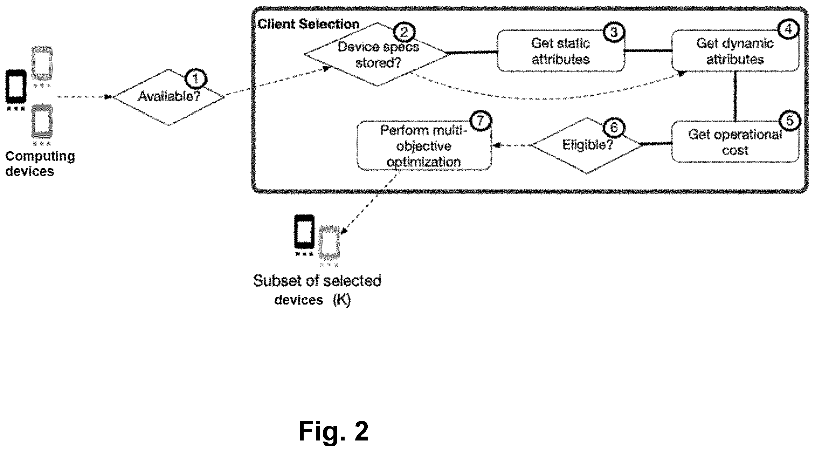

With regard to Fig. 2, therein an embodiment of the proposed method for selecting the subset of computing devices that will execute the distributed learning procedure is illustrated. Particularly, the selection comprises, at step 1, requesting availability for each computing device. Only available computing devices will be considered in the subsequent process. Then, at step 2, the method verifies whether static device attributes have been stored previously. Note that step 3 is performed only if static attributes are not available. If so, computing device specifications are obtained. This data comprises general HW specifications that do not vary with time; hence, are preferably requested only once.

At step 4, dynamic attributes for each considered computing device are requested, and at step 5, the operational cost for each computing device is obtained. Optionally, additional eligibility criteria could be applied (step 6) to discard those computing devices exceeding the maximum allowed operational cost of not reaching minimum requirements for other attributes (available battery, computing power...). Finally, at step 7, a multi-objective optimization is performed, which means performing a bilevel optimization regarding cumulative cost and fairness assessment. As a result, it creates a list of computing devices that will participate in the next distributed learning round.

Following, each of the previous steps will be explained in greater detail.

Availability check (step 1)

The availability check procedure is used to discard the set of computing devices that would not be available for the next distributed learning round. A computing device is not available to participate in the next round if it has no connection to an unmetered network at the time of performing the check and/or it does not send a response to the availability request in a timely manner.

Although having a connection with the server is the minimum requirement, there are other optional cases in which the computing device could opt-out of being considered as available:

1. In case the user rejects to participate
2. In case the computing device does not have enough battery
3. In case the computing device does not have enough data

Characterization of end-devices (step 2-4)

Each computing device between the set of computing devices that are available would be characterized through a collection of attributes collected in different forms. Some of them are to be collected only once and will be part of the attributes that are considered static. Step 2 corresponds to the process of checking if static attributes have been already collected for a given computing device. Otherwise, they are requested (step 3). The set of static attributes that can be considered are described in the following list:

- Static attributes (Data that computing devices transmit once):

    ○ Device model which encodes other variables (but might not be limited to): year, brand, memory, CPU, storage capacity, etc.

The rest are named dynamic attributes, those attributes could vary with time and will be particularly collected regularly during the distributed learning process (step 4) before each distributed learning round. The list of attributes that can be used to characterize computing devices is as follows:

- Dynamic attributes (Data that the computing device can transmit regularly):

    ○ Battery level. Amount of available battery at a certain timestamp.
    ○ Battery health (degrades over months). Percentage of battery degradation.
    ○ Charging status. Indicates whether the computing device is charging at a certain timestamp.
◦ Connectivity status (WIFI or mobile). Indicates how the computing device is connected to the Internet (through WIFI or mobile data)
◦ Data transfer price, the price per transmitted byte
◦ Resource consumption (e.g., avg CPU over the last 5mins) -- might not be reliable?
◦ Geo-location
◦ Sample size
◦ Sample type (e.g., class distribution)

Operational cost calculation (step 5)

The operational cost formula can consider the following variables:

◦ Computation cost ($C_1$).
◦ Communication cost ($C_2$).

$C_1$ can be approximated through the following formula, as defined in "Energy and Policy Considerations for Modern Deep Learning Research", Strubell, E. et al. (2019):

$$C_1 = P_{CPU} + P_{Memory} + P_{GPU} \cdot E$$

where:

- $P_{CPU}$ describes the total power draw (watts/h) from CPU usage during training
- $P_{Memory}$ corresponds to the total power draw from DRAM during training
- $P_{GPU}$ corresponds to the number of available GPUS ($g$) used during training multiplied to the average power draw per GPU during training ($p_g$). This only applies in case the device is equipped with GPUs that could be used for model training purposes.
- $E$ corresponds to the electricity cost. Cost of each Watt per hour in the area where the device is charged, what defines where the electricity cost is incurred.

Additionally, $C_2$ can be approximated as:

$$C_2 = C_{2ComputationPower} \cdot E + C_{2DataTransfer,}$$

where:

- $C_{2ComputationPower}$ corresponds to the total power cost incurred for sending the information (watts/h)
- $E$ describes again the electricity cost fer each watt/h.desce plus the data transmission cost that the communications service provider can charge derived for the same task
- $C_{2DataTransfer}$ if applicable, corresponds to the data transmission cost that the communciations service provider can charge the computing device for each transmitted byte multiplied by the size of the model $M$.

At the beginning of each round, the server will approximate the operational costs that each computing device would incur if participating in the next distributed learning round as:

$$C = C_1 + C_2.$$

In some embodiment, heuristics can be also used for reducing the search space (i.e. reducing the number of computing devices for which operational costs need to be approximated). For example, as one of the objectives is to reduce inequalities in the cumulative operational costs among computing devices, the portion of computing devices which have higher cumulative values could be discarded for the next round.

Eligibility criteria (step 6)

Following the state of the art, additional threshold-based business rules could be defined for specific attributes to discard computing devices not satisfying them e.g. those not having enough battery.
In contrast to the opt-out availability options that are eligible from the client side, these second check is performed at the side of the server and is used to detect the set of eligible computing devices between the available ones.

Multi-objective optimization (step 7)

In first place, present invention requires the server to keep track of the cumulative operational costs incurred by each participating computing device during the distributed learning process. As has been mentioned before, the invention pursues two different objectives: Minimizing overall cumulative operational cost and achieving fairness in operational cost distribution.
With regard to the first objective, the minimization of the overall sum ($C_{SUM}$) can be achieved through composition by minimizing the sum of operational costs incurred by each computing device in each of the Distributed learning rounds.
It corresponds to the sum of all the cumulative operational costs incurred during the distributed learning lifecycle. Values can be either approximated using the formulas described above or exact, by quantifying for example battery drains after participating in each distributed learning round. This can be defined as:

$$C_{SUM} = \sum_{i=0}^{P} C(c[i]),$$

where $c[i]$ refers to the i-th computing device from the population $P$ and $C$ refers to the operational cost incurred by it.

The first objective is then to minimize $C_{SUM}$.

With regard to the second objective, present invention's notion of fairness ($F_{COST}$) relies on the idea that, spread over time, all computing devices should be charged with an amount of operational costs that is similar to the operational costs of other computing devices participating in the distributed learning process. In other words, achieving fairness requires minimizing disparities in the operational costs incurred between computing devices.

Under the assumption that at a given distributed learning round, a subset of computing devices are to be selected between a population of available computing devices. Typically the number of devices selected for each round is significantly smaller than the total size of the population, what makes it impossible to minimize disparities for all the computing devices in a single round.

Present invention defines $F_{COST}$ as the maximum difference existing between any pair of two computing devices $c[i]$ and $c[j]$ from the initial population $P$ :

$$F_{COST} = \max\left(\sum_{i=0}^{P}\sum_{j=0}^{P}|C(c[i]) - C(c[j])|\right)$$

Achieving Fairness in this context is equivalent to minimizing $F_{COST}$.

Alternative implementations of the $F_{COST}$ function could consider aggregation functions such as the average or median difference between each pair of computing devices.

Finally, regarding optimization, to address the task of selecting the portion of $K$ computing devices to participate in a given distributed learning round, present invention proposes a multi-objective approach that seeks to minimize a combination of $C_{SUM}$ and $F_{COST}$.

In some embodiments, the multi-objective optimization formula can be formalized as a Bilevel optimization task as follows:

$$\min(C_{SUM})$$
$$s.\ t.\ min(F_{COST})$$

Bilevel optimization involves two optimization problems: an outer one and an inner one. The inner problem is solved first, and the outcome of that problem is used to solve the outer problem. To solve this optimization problem, present invention first needs to check if the equation's optimization function is convex. If it is convex, it can use the Karush-Kuhn-Tucker (KKT) conditions, a well-known exact approach, to solve it. Alternatively, it can use Gradient-Descent techniques to solve the problem.

As result of this step, the set of computing devices $K$ whose participation in the next distributed learning round would optimize the above function is obtained.

The server updates the cumulative operational cost for each participating device with the last values obtained.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

**Claims**

1. A method for cost-effective and fair computing device selection in a distributed learning architecture, comprising:

   a) receiving, by a subset of selected computing devices, for a learning training round, a global machine learning, ML, model;
   b) training, by each computing device of the subset of selected computing devices, the received global ML model with local data available at the computing device, providing a trained local ML model as a result;
   c) sending, by each computing device, the trained local ML model to a server;
   d) aggregating, by the server, the received local ML models; and
   e) repeating steps a)-d) until a stop criteria is reached,

**characterized in that** in step a), the subset of computing devices is selected by the server performing the following steps:

sending a request to a plurality of computing devices to determine their availability for a learning training round;
checking whether static attributes of the available computing devices are accessible, or otherwise, sending a request to the available computing devices for their static attributes;
sending a request to the available computing devices for dynamic attributes thereof;
calculating, for each computing device, an energy consumption operational cost that will be incurred if the computing device participates in the learning training round using computation and communication power costs of each computing device; and
performing, for each computing device, a multi-objective optimization that minimizes an overall cumulative operational cost of the computing device and fairness assessment.

**2.** The method of claim 1, wherein the multi-objective optimization is based on a bilevel optimization comprising:

checking if an equation's optimization function is convex, and if it is
solving the function using the Karush-Kuhn-Tucker, KKT, approach or a Gradient-Descent technique.

**3.** The method of any one of the previous claims, wherein the static attributes comprises hardware specifications of the computing devices including year, brand, memory, CPU, GPU availability, and/or storage capacity.

**4.** The method of any one of the previous claims, wherein the dynamic attributes comprises a battery level, a battery health, a charging status, a connectivity status, a data transfer price, a resource consumption, a geolocation, a sample size, and/or a sample type of the computing devices.

**5.** The method of any one of the previous claims, wherein before the performance of the multi-objective optimization the method comprises:

defining threshold-based rules for some of the dynamic attributes; and
discarding the computing devices not satisfying the defined threshold-based rules.

**6.** The method of any one of the previous claims, wherein previous to the calculation of the energy consumption operational cost one or more heuristics are used to reduce the number of computing devices for which the calculation need to be performed.

**7.** The method of any one of the previous claims, wherein the distributed learning architecture comprises a Federated Learning architecture.

**8.** A server for cost-effective and fair computing device selection in a distributed learning architecture, comprising:

a memory; and
one or more processors, configured to select a subset of computing devices from a plurality of computing devices by:

sending a request to the plurality of computing devices to determine their availability for a learning training round;
checking whether static attributes of the available computing devices are accessible, or otherwise, sending a request to the available computing devices for their static attributes;
sending a request to the available computing devices for dynamic attributes thereof;
calculating, for each computing device, an energy consumption operational cost that will be incurred if the computing device participates in the learning training round using computation and communication power costs of each computing device; and
performing, for each computing device, a multi-objective optimization that minimizes an overall cumulative operational cost of the computing device and fairness assessment,

wherein the server and the subset of selected computing devices are configured to execute a distributed learning procedure until a stop criteria is reached.

**9.** The system of claim 8, wherein the static attributes comprises hardware specifications of the computing devices including year, brand, memory, CPU, GPU availability, and/or storage capacity.

**10.** The system of claim 8 or 9, wherein the dynamic attributes comprises a battery level, a battery health, a charging status, a connectivity status, a data transfer price, a resource consumption, a geolocation, a sample size, and/or a sample type of the computing devices.

**11.** The system of any one of the previous claims 8-10, wherein the distributed learning architecture comprises a Federated Learning architecture.

12. A non-transitory computer readable medium comprising code instructions that when executed by at least one processor of a computing system implement the method of any of claims 1 to 7.

Fig. 1

Fig. 2

Europäisches
Patentamt

European
Patent Office

Office européen
des brevets

# EUROPEAN SEARCH REPORT

**Application Number**

EP 23 38 3268

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SULTANA ABEDA ET AL: "Eiffel: Efficient and Fair Scheduling in Adaptive Federated Learning", IEEE TRANSACTIONS ON PARALLEL AND DISTRIBUTED SYSTEMS, IEEE, USA, vol. 33, no. 12, 28 June 2022 (2022-06-28), pages 4282-4294, XP011918114, ISSN: 1045-9219, DOI: 10.1109/TPDS.2022.3187365 [retrieved on 2022-06-29] * the whole document * | 1-12 | INV. G06F9/50 G06N3/063 G06N3/098 G06N20/00 |
| X | US 2022/076169 A1 (WANG SHIQIANG [US] ET AL) 10 March 2022 (2022-03-10) * paragraph [0001] * * paragraph [0003] * * paragraph [0007] * * paragraph [0033] * * paragraph [0042] * * paragraph [0047] * * paragraph [0049] – paragraph [0050] * * paragraph [0053] * | 1-12 | |
| | | | TECHNICAL FIELDS SEARCHED (IPC) |
| | | | G06F G06N |

The present search report has been drawn up for all claims

| Place of search | Date of completion of the search | Examiner |
|---|---|---|
| The Hague | 2 May 2024 | Alecu, Mihail |

## ANNEX TO THE EUROPEAN SEARCH REPORT
## ON EUROPEAN PATENT APPLICATION NO.

EP 23 38 3268

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2024

| Patent document cited in search report | Publication date | Patent family member(s) | | Publication date |
|---|---|---|---|---|
| US 2022076169 A1 | 10-03-2022 | CN | 116134448 A | 16-05-2023 |
| | | DE | 112021003908 T5 | 11-05-2023 |
| | | GB | 2616524 A | 13-09-2023 |
| | | JP | 2023541146 A | 28-09-2023 |
| | | US | 2022076169 A1 | 10-03-2022 |
| | | WO | 2022052636 A1 | 17-03-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Communication-efficient learning of deep networks from decentralized data. **BRENDAN MCMAHAN** ; **EIDER MOORE** ; **DANIEL RAMAGE** ; **SETH HAMPSON** ; **BLAISE AGUERA Y AREAS**. Artificial intelligence and statistics. 2017, 1273-1282
- **BING LUO** ; **XIANG LI** ; **SHIQIANG WANG** ; **JIANWEI HUANG** ; **LEANDROS TASSIULAS**. Cost-Effective Federated Learning Design. *arXiv*, 2020
- **Y. ZHAN** ; **J. ZHANG** ; **Z. HONG** ; **L. WU** ; **P. LI** ; **S. GUO**. A Survey of Incentive Mechanism Design for Federated Learning. *IEEE Transactions on Emerging Topics in Computing*, 01 April 2022, vol. 10 (2), 1035-1044
- **Y. SHI** ; **H. YU** ; **C. LEUNG**. Towards Fairness-Aware Federated Learning. *IEEE Transactions on Neural Networks and Learning Systems*
- **P. ZHOU** ; **P. FANG** ; **P. HUI**. Loss tolerant federated learning. *ArXiv, vol. abs/2105.03591*, 2021
- **HORVÁTH, SAMUEL** ; **STEFANOS LASKARIDIS** ; **MARIO ALMEIDA** ; **ILIAS LEONTIADIS** ; **STYLIANOS VENIERIS** ; **NICHOLAS LANE**. FjORD: Fair and Accurate Federated Learning under Heterogeneous Targets with Ordered Dropout.. *Advances in Neural Information Processing Systems*
- **WU, C.-J.** ; **RAGHAVENDRA, R.** ; **GUPTA, U.** ; **ACUN, B.** ; **ARDALANI, N.** ; **MAENG, K.** ; **CHANG, G.** ; **BEHRAM, F. A.** ; **HUANG, J.** ; **BAI, C.** *Sustainable AI: Environmental Implications, Challenges and Opportunities*, 2021, vol. 2, 1-16
- **STRUBELL, E. et al.** *Energy and Policy Considerations for Modern Deep Learning Research*, 2019